Europäisches Patentamt

European Patent Office

Office européen des brevets

(19)

(11) Numéro de publication: **0 252 842**
**B1**

(12) **FASCICULE DE BREVET EUROPEEN**

(45) Date de publication du fascicule du brevet:
**11.04.90**

(21) Numéro de dépôt: **87401604.1**

(22) Date de dépôt: **08.07.87**

(51) Int. Cl.⁴: **B23H 9/06,** B41M 3/10,
B41C 1/04 .

(54) **Procédé de fabrication d'un outil servant à l'emboutissage des toiles formaires d'une forme ronde utilisée pour réaliser des filigranes, et appareil pour la mise en oeuvre du procédé.**

(30) Priorité: **10.07.86  FR 8610089**

(43) Date de publication de la demande:
**13.01.88 Bulletin 88/2**

(45) Mention de la délivrance du brevet:
**11.04.90 Bulletin 90/15**

(84) Etats contractants désignés:
**AT BE CH DE ES FR GB GR IT LI LU NL SE**

(56) Documents cités:
**BE-A- 837 814**
**CA-A- 1 003 049**
**US-A- 2 881 246**
**US-A- 3 769 455**

(73) Titulaire: **BANQUE DE FRANCE, 37-39, Quai de Dion Bouton, F-92803 Puteaux(FR)**

(72) Inventeur: **Puyplat, Olivier, 66, rue d'Auteuil, F-75016 Paris(FR)**

(74) Mandataire: **Martin, Jean-Jacques et al, Cabinet REGIMBEAU 26, Avenue Kléber, F-75116 Paris(FR)**

**Description**

La présente invention concerne le domaine de l'industrie du papier, et plus particulièrement les outils d'emboutissage des toiles formaires d'une forme ronde du type de celles qui sont utilisées dans l'industrie du papier fiduciaire pour réaliser des filigranes.

La forme ronde d'une machine à papier fiduciaire comprend habituellement un certain nombre de toiles de bronze (généralement trois), dont la taille des mailles va en décroissant de l'intérieur vers l'extérieur, afin de favoriser la formation de la feuille et l'écoulement de l'eau de dilution des fibres. La deuxième toile (contre-toile) et la troisième (véline) comportent des emboutissages emboîtés dont les creux et les reliefs, par le rétention différentielle des fibres qu'ils entraînent, créent les diverses valeurs des filigranes ombrés.

Traditionnellement, on utilise des outils d'emboutissage spécialement prévus pour l'emboutissage de ces outils formaires, ces outils étant réalisés en cuivre ou en nickel, avec l'aide d'une installation de traitements galvanoplastiques.

Selon une technique largement répandue, on procède comme suit :

1) on part d'une réplique en matière plastique (par exemple du silastène) d'une cire qu'un artiste a gravée à partir d'une image ; il faut compter environ deux jours pour achever la polymérisation de cette réplique ;

2) la réplique est rendue conductrice par divers moyens tels que film de plombagine, vaporisation de vernis à base de graphite, etc... ;

3) la réplique est alors plongée dans un bain de galvanoplastie pour obtenir son contretype en cuivre ou en nickel ; deux jours sont en général nécessaires pour obtenir un contretype convenable.

On pourrait utiliser le contretype obtenu comme outil d'emboutissage, mais on préfère en général réaliser, là encore par électroformage, un élément "en dur", par exemple en cuivre, qui est donc l'identique de la réplique plastique de la cire gravée initiale : cet élément permet en effet d'obtenir, toujours par électroformage, plusieurs outils d'emboutissage, c'est pourquoi les spécialiste du domaine le dénomment habituellement "élément générateur".

Les étapes de fabrication se déroulent successivement ainsi, à partir de la cire gravée à la main par un artiste : réplique plastique (polymérisation : deux jours), contretype en cuivre ou nickel (électroformage : deux jours), élément générateur (électroformage : deux jours), outil d'emboutissage ou cuivre ou nickel (électroformage : deux jours). Il faut donc compter en moyenne un délai minimum de quatorze jours pour obtenir une série de quatre outils d'emboutissage à partir de la cire "artiste".

En fait, il y a lieu de compter avec les retouches sur la cire suggérée par l'examen du papier obtenu à partir d'une formette emboutie avec le premier outil. Si une seule étape de retouche se révèle suffisante, le délai défini précédemment passe de quatorze jours à vingt jours en comptant quatre jours pour la fabrication de la formette, celle du papier et les retouches subséquentes de la cire.

Cette technique d'électroformage est largement utilisée car elle est fidèle et facile à conduire, même si chaque processus de dépôt est relativement long.

Cependant, le délai d'obtention d'une série d'outils d'emboutissage reste extrêmement long. De plus, il est reconnu qu'un tel dépôt électrolytique conduit à une structure de métal plutôt lâche, ce qui confère à l'outil un faible résistance à la pression. Il en résulte une usure relativement rapide de l'outil par marquage des mailles des toiles de bronze qu'il doit emboutir et par un affaissement général de ses parties saillantes ; un tel outil est ainsi appelé à être remplacé fréquemment.

Il est donc tentant, pour abaisser le coût de production de tels outils d'emboutissage, d'envisager de réaliser des outils en acier plutôt qu'en cuivre ou en nickel. En effet, un outil en acier aura une durée de vie très améliorée, et si les caractéristiques de l'acier utilisé pour sa confection peuvent être optimisées, son usure pourra devenir négligeable quel que soit le nombre d'emboutissages qui lui sera demandé.

Parmi les diverses techniques envisageables pour le façonnage en acier de ces outils formaires, la demanderesse a plus spécialement exploré celle de l'usinage par étincelage ou électro-érosion, afin de réaliser un outil en acier à partir de l'élément générateur en cuivre obtenu par le processus de fabrication précédemment décrit, cet élément générateur étant une réplique conductrice de l'outil faisant fonction d'électrode.

L'usinage par électro-érosion est une technique de reproduction utilisée couramment dans le domaine de l'automobile, de l'aviation et du nucléaire, car elle permet d'usiner, avec de très grandes précisions, des métaux réfractaires à tout usinage classique (comme par exemple, du carbure de tungstène). Ce type particulier d'usinage, n'utilisant aucun outil coupant, se fait sans contact : l'arrachage du métal est réalisé par une succession d'étincelles qui s'établissent entre la pièce à usiner et la réplique de la forme à obtenir, réplique conductrice appelée électrode pour la circonstance.

Il a été ainsi utilisé un ensemble classique d'usinage par électro-érosion comportant un générateur de décharges intermittentes (les décharges électriques étant contrôlées en durée et en courant) et un bâti support d'une électrode en cuivre et d'une pièce à usiner en acier trempé. La pièce à usiner est alors fixée dans un bac contenant un liquide diélectrique (en général du kérosène) et ayant pour fonction d'assurer le passage du courant et l'extraction du métal érodé nettoyant ainsi l'intervalle entre électrode et pièce à usiner. Pour que le travail soit automatique, la descente de l'électrode dans la pièce doit être servo-commandée, de telle sorte que la distance entre électrode et pièce à usiner soit maintenue à la valeur de l'épaisseur de diélectrique qui peut être rompue par les décharges ; à cet effet, la descente de l'électrode est asservie à la différence de potentiel entre l'électrode et la pièce à usiner.

Il est bien connu dans cette technique que le débit de matière enlevée dépend de nombreux facteurs, le premier étant le régime d'étincelage fourni par le générateur ; l'obtention d'un débit le plus élevé possible en utilisant des étincelles puissantes à grandes fréquences de récurrence est cependant limitée par l'état de surface recherché et la précision d'usinage. En l'occurence, étant donné qu'un outil d'emboutissage pour toiles formaires est appelé à travailler sur des toiles de bronze qui sont loin de représenter des surfaces continues, on n'utilise pas au maximum toutes les possibilités offertes par l'électro-érosion. Il serait en effet déraisonnable de rechercher une très grande précision (par example au centième de millimètre près) pour la définition de ces outils, celle-ci étant non seulement inutile, mais coûteuse car le temps d'usinage est de facto beaucoup plus long.

Cette technique permet effectivement de réaliser des outils formaires en acier, mais le temps d'obtention d'une série d'outils reste relativement long. Un autre inconvénient, commun d'ailleurs aux techniques classiques exposées plus haut servant à réaliser des outils en cuivre ou en nickel à partir d'une cire "artiste", réside dans l'utilisation d'une installation de galvanoplastie, laquelle est toujours coûteuse et oblige à prévoir des traitements spéciaux en raison des inévitables effluents et pollutions.

L'état de la technique est par ailleurs illustré par les systèmes visant à reproduire un cliché ou une image, au moyen de procédés d'impression typographique. Il s'agit de systèmes dans lesquels on travaille en deux dimensions, l'effet des demi-tons du cliché ou de l'image à reproduire étant exclusivement obtenu par des variations de densité plane de taches.

Ainsi, le document US-A-3 769 455 décrit un procédé de reproduction d'une image en demi-tons de gris, sur des éléments cylindriques tels que cylindres d'impression. On numérise l'image en demi-tons de gris, et le report d'un cylindre sur l'autre se fait par une tête de gravure travaillant en trame en synchronisation avec la rotation des deux cylindres, le mouvement unidirectionnel de l'outil de gravure étant commandé par un électro-aimant pour réaliser des trous de différents diamètres, ce qui permet de traduire par la suite un effet de demi-tons lors de l'impression. D'ailleurs, l'obtention à cet effet de trous sur un cylindre au moyen de fraises coniques était déjà bien connue (voir par exemple le document US-A-2 881 246).

On connaît également des techniques de transfert de cliché sur métal par électro-érosion procédant de la même approche que les systèmes précédents, c'est-à-dire avec une densité plane de taches ou de trous comme paramètre principal. C'est ainsi que le brevet canadien N° 1 003 049 décrit un procédé de fabrication d'un badge en métal, obtenu à l'aide d'un transfert par électro-érosion d'un cliché en cuivre servant d'électrode. Il s'agit d'un travail en deux dimensions seulement, car on part d'une électrode à profondeur indépendante de toute valeur de niveau de gris. Une technique analogue, concernant le domaine tampographique, est décrite dans le brevet belge N° 837 814 ; il est d'ailleurs intéressant de noter que l'enseignement de ce brevet est en faveur de l'utilisation de clichés typographiques afin d'éviter les opérations délicates de fraisage pour la gravure des électrodes d'électro-érosion.

D'une façon générale, les procédés d'impression typographique ci-dessus ont en commun une approche bidimensionnelle pour la reproduction d'un cliché ou d'une image. Une telle approche ne saurait ainsi convenir pour la fabrication d'outils d'emboutissage pour laquelle l'approche est tridimensionnelle ou photogrammétrique.

L'invention a pour objet de proposer un procédé de fabrication d'outils formaires en acier ne nécessitant pas de processus galvanoplastiques, de façon à s'affranchir en particulier des contraintes sévères pour des raisons d'anti-pollution, et à abaisser le coût de production de ces outils.

Un autre objet de l'invention est de rendre possible une automatisation poussée de la fabrication, et ce non seulement pour une uniformisation de la qualité des outils réalisés, mais pour s'affranchir le plus possible du délai de leur obtention.

Il s'agit plus particulièrement d'un procédé de fabrication d'un outil en acier servant à l'emboutissage des toiles formaires d'une forme ronde utilisée dans l'industrie du papier fiduciaire pour réaliser des filigranes, ledit outil étant obtenu par électro-érosion à partir d'une électrode, caractérisé par le fait qu'il comporte les étapes successives suivantes :

a) on numérise les valeurs d'une image en noir et blanc en pixels à plusieurs niveaux de gris,
b) on grave automatiquement par usinage une électrode, plan par plan, directement à partir des données précédentes, avec une profondeur de gravure croissant régulièrement par rapport à la surface initiale de ladite électrode, la profondeur de gravure étant en correspondance biunivoque avec les niveaux de gris,
c) on dispose l'électrode ainsi gravée dans un banc d'usinage par électro-érosion jusqu'à obtention d'un outil présentant l'état de surface recherché.

L'outil en acier obtenu pourrait éventuellement être utilisé pour la réalisation par enfonçage sous presse d'autres électrodes, en cuivre ou mieux en argent, chaque nouvelle électrode permettant de réaliser un ou plusieurs (en général deux) outils formaires par électroformage. Cependant, l'invention a principalement pour vocation de s'affranchir des contraintes inhérentes aux processus galvanoplastiques, de sorte que sera admis le principe d'obtention d'un seul outil à partir d'une électrode non réutilisable ; la gravure d'une série d'électrodes pourra néanmoins être réalisée aisément en automatique, en temps masqué dans le cycle d'usinage de la machine à étinceler.

De préférence, l'électrode gravée est usinée, pour chaque profondeur de gravure, selon un balayage analogue à celui employé pour numériser l'image en noir et blanc ; par mesure de commodité, on utilise avantagesusement un balayage orthogonal en x, y, de sorte que les informations relatives à chaque pixel (x, y, niveau de gris) correspondent directement à une instruction de gravure (x, Y, profondeur de gravure).

Les informations relatives à chaque pixel sont éventuellement traitées par des moyens informatiques pour améliorer les contrastes, et/ou nettoyer des zones et/ou modifier des détails ; avantageusement, ces informations, éventuellement traitées, sont mises en mémoire, de préférence stockées sur une mémoire magnétique permanente.

Selon une variante possible, une profondeur de gravure en correspondance avec un niveau de gris est réalisée en une ou plusieurs passes d'usinage selon le degré de profondeur et la fragilité de l'électrode à graver ; d'une façon générale, le plus bas niveau de gris est associé à une profondeur de gravure nulle, c'est-a-dire la pleine épaisseur de l'électrode.

De préférence, l'électrode gravée est en graphite, la gravure par usinage de ladite électrode se faisant au moyen d'une fraise rotative, et l'outil d'emboutissage est obtenu a partir d'une pièce à usiner en acier non traité ayant une faible teneur en carbone.

L'invention concerne également un appareil pour la mise en oeuvre du procédé de l'invention, et plus particulièrement un appareil caractérisé par le fait qu'il comporte :
- des moyens connus en soi pour numériser les valeurs d'une image en noir et blanc en pixels à plusieurs niveaux de gris,
- des moyens pour graver par usinage une électrode, plan par plan, selon une profondeur de gravure prédéterminée croissant régulièrement par rapport à la surface initiale de ladite électrode, et des moyens pour positionner dans un plan l'électrode à graver par rapport aux moyens de gravure par usinage, lesdites moyens de gravure et de positionnement étant commandés automatiquement à partir des données relatives à chacun desdits pixels afin d'obtenir des profondeurs de gravure en correspondance biunivoque avec les niveaux de gris, l'électrode ainsi gravée permettant d'obtenir l'outil désiré par électro-érosion.

Selon un mode de réalisation particulièrement avantageux, les moyens de gravure par usinage comportent une fraise rotative, et une butée réglable permettant de déterminer avec précision la profondeur de gravure pour chaque passe successive ; la fraise rotative est de préférence montée sur un support mobile en translation dans la direction fixe de travail de ladite fraise rotative, ledit support mobile étant réglé en position au moyen d'une vis micrométrique : en particulier, la vis micrométrique détermine la position de la butée réglable correspondant à une profondeur de gravure associée, des moyens élastiques étant en outre prévus tendant à rappeler la fraise rotative vers une position relevée.

avantageusement, les moyens de positionnement comportent une table à mouvements croisés, équipée de deux moteurs pas à pas et dont le plan est perpendiculaire à la direction fixe de travail de la fraise rotative ; dans une variante intéressante, le support de la fraise rotative est fixé sur un barillet qui supporte également un capteur servant à numériser les valeurs de l'image en noir et blanc, tel qu'un détecteur optique à réflexion de grande résolution, de sorte que la table mobile peut supporter aussi bien l'image en noir et blanc dont les valeurs sont à numériser que l'électrode à graver, la position angulaire du barillet support étant déterminée pour amener le capteur ou la fraise rotative au-dessus de la table de travail.

L'utilisation de l'appareil peut être encore facilitée en prévoyant que le barillet et les organes qu'il supporte peuvent être degagés par basculement d'une potence de support.

D'autres caractéristiques et avantages de l'invention apparaîtront plus clairement à la lumière de la description qui va suivre et des dessins annexés, concernant un mode particulier de réalisation, en référence aux figures où :

- la figure 1 illustre schématiquement les différentes étapes d'un procédé de fabrication d'outils formaires conforme à l'invention,
- la figure 2 illustre schématiquement trois passes successives d'usinage avec un degré respectif de profondeur en correspondance biunivoque avec un niveau de gris associé,
- la figure 3 est une vue en perspective illustrant un appareil pour la mise en oeuvre du procédé, et en particulier les moyens de gravure et de positionnement permettant de graver une électrode, celle-ci permettant à son tour d'obtenir un outil formaire en acier par électro-érosion dans une installation non représentée car bien connue des spécialistes en matière d'usinage,
- la figure 4 est une vue partielle de l'appareil de la figure 3, illustrant le montage de la fraise rotative sur le barillet de l'appareil, avec possibilité de dégagement par basculement d'une potence de support,
- la figure 5 est une vue en plan du support de la fraise rotative, permettant de mieux distinguer le moyen de butée réglable utilisé pour régler la profondeur de gravure, et sur laquelle est représenté schématiquement un circuit électro-pneumatique de commande du déplacement vertical de la fraise,
- la figure 6 est une vue de côté du support illustré en figure 5.

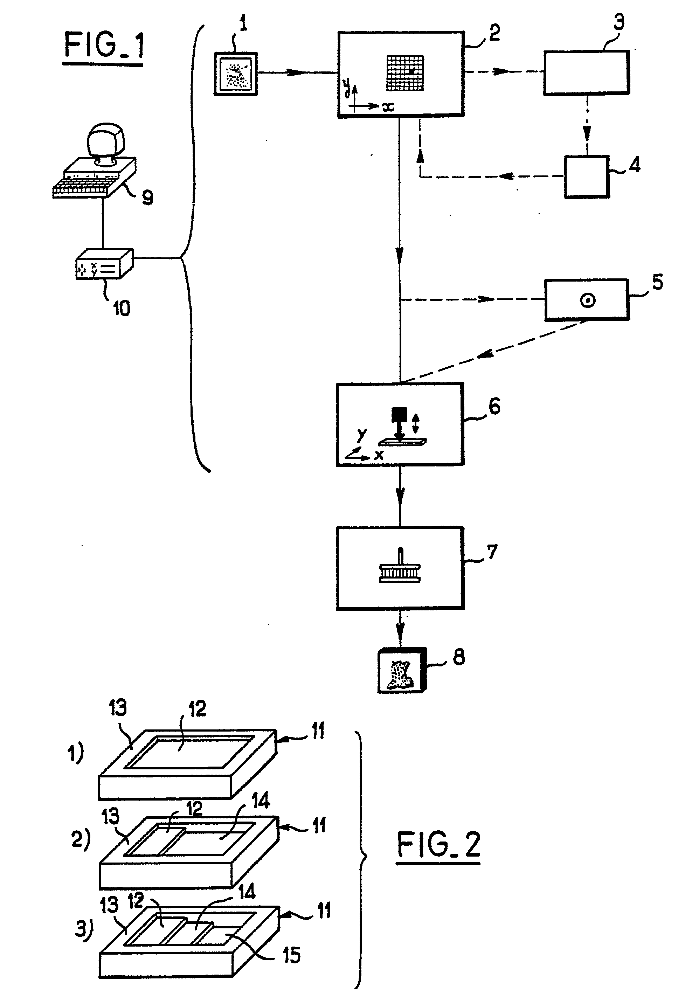

La figure 1 donne une illustration schématique d'un procédé de fabrication d'outils formaires en acier conforme à l'invention, ces outils servant à l'emboutissage des toiles formaires d'une forme ronde utilisée classiquement dans l'industrie du papier fiduciaire pour réaliser des filigranes, en particulier pour les papiers de sécurité et billets de banque.

Dans une première étape, on numérise une image 1 en noir et blanc, par exemple une photographie dont la définition est très précise, en pixels à plusieurs niveaux de gris, les moyens utilisés étant schématisés par le bloc 2.

On numérise par exemple en pixels à dix niveaux de gris suivant un balayage orthogonal en x et y. La saisie des niveaux gris peut être réalisée par pixels de 0,20 x 0,20 mm après calibrage d'une cellule de saisie sur le blanc et le noir de la photo ; le balayage s'effectue de préférence colonne par colonne sur la plus grande longueur de la photographie, en se déplaçant d'un pixel sur une ligne après chaque retour.

Les moyens optiques permettant de numériser les valeurs de la photographie sont connus de l'homme de l'art. Il est intéressant de choisir un capteur du type détecteur intégré de lumière réflective à grande résolution, comportant une diode électroluminescente de 0.178 mm de diamètre émettant dans le spectre visible à 700 nm et un photodétecteur. Le niveau de gris est alors indiqué par le taux de réflexion de la lumière émise par la diode et reçue par le photodétecteur. Un calibrage est dans la pratique indispensable, avec un réglage précis des deux niveaux de gris extrêmes (blanc et noir) ; les moyens modernes actuellement disponibles permettent d'effectuer automatiquement ce réglage en ajustant l'offset et le gain de la chaîne d'acquisition, en plaçant la cellule tour à tour sur une zone noire et sur une zone blanche.

Ainsi que cela sera décrit par la suite, on utilise avantageusement une table à mouvements croisés, permettant de réaliser un balayage orthogonal en x et y grâce à deux moteurs pas à pas.

On obtient ainsi au niveau du bloc 2 un ensemble de données, avec un triplet pour chaque pixel (x, y, niveau de gris), ce triplet étant pour plus de clarté rappelé schématiquement sur ledit bloc en figure 1. A titre indicatif, le temps de lecture d'une photographie de 50 x 20 mm est de l'ordre de 33 mn.

Il est intéressant de prévoir une imprimante 3 permettant un contrôle visuel de la reproduction obtenue ; les informations relatives à chaque pixel peuvent être alors traitées par des moyens informatiques (bloc 4) pour améliorer les contrastes et/ou nettoyer des zones particulières et/ou modifier quelques détails, ainsi que cela est connu dans le domaine des saisies d'image.

Les informations relatives à chaque pixel, éventuellement traitées au niveau du bloc 4, sont avantageusement mises en mémoire, et de préférence stockées sur une mémoire magnétique permanente représentée sur la figure 1 par le bloc 5. Si l'on utilise une disquette, il conviendra de choisir sa capacité pour un support d'une image entière : par exemple, avec une résolution de 0,2 mm pour une photographie de 50 x 20 mm, et un codage de chaque pixel sur 8 bits, la capacité de la disquette ne devra pas être inférieure à 25 K octets.

Dans une deuxième étape, on grave automatiquement une électrode, par usinage, plan par plan, directement à partir des données précédentes (mises en mémoire ou non), avec une profondeur de gravure croissant régulièrement par rapport à la surface initiale de ladite électrode, la profondeur de gravure étant en correspondance biunivoque avec les niveaux du gris, les moyens utilisés étant schématisés par le bloc 6.

De préférence, l'électrode gravée est usinée pour chaque profondeur de gravure, selon un balayage analogue à celui qui a été employé pour numériser l'image en noir et blanc : avec un balayage orthogonal en x et y, les informations relatives à chaque pixel (x, y, niveau de gris) vont ainsi correspondre directement à une instruction de gravure (X, Y, profondeur de gravure), ce dernier triplet étant pour plus de clarté rappelé schématiquement sur le bloc 6 en figure 1.

Les moyens de gravure utilisés dans cette étape de gravure automatique d'une électrode, et permettant de réaliser ainsi une photogrammétrie semblable à celle du graveur formaire, seront décrits en détail plus loin.

Dans une troisième étape, on dispose l'électrode ainsi gravée dans un banc d'usinage par électro-érosion, comme indiqué schématiquement par le bolc 7, jusqu'à obtention d'un outil 8 présentant l'état de surface recherché.

L'outil en acier 8 obtenu pourrait éventuellement être utilisé pour la réalisation par enfonçage sous presse d'autres électrodes, en cuivre, ou mieux en argent pour éviter des opérations de recuit intermédiaires, chaque nouvelle électrode permettant de réaliser un ou plusieurs (en général deux) outils formaires par électroformage. Cependant, l'invention a principalement pour vocation de s'affranchir des contraintes inhérentes au processus galvanoplastiques, de sorte que sera admis le principe d'obtention d'un seul outil à partir d'une électrode non réutilisable ; la gravure d'une série d'électrodes pourra néanmoins être réalisée aisément en automatique, en temps masqué dans le cycle d'usinage de la machine à étinceler.

Parmi les matériaux susceptibles de constituer des électrodes performantes et faciles à graver, le graphite sera préféré, la gravure par usinage de l'électrode se faisant avantageusement au moyen d'une fraise rotative.

En particulier, le graphite référencé G 1700 donne d'excellents résultats. Ce type de graphite est classiquement utilisé pour la fabrication de petits moules d'injection avec des nervures et des détails très fins ; pour son usinage, des vitesses de coupe et d'avance importantes peuvent être utilisées.

On peut ainsi obtenir un outil formaire en acier présentant l'état de surface et la précision d'usinage désirés, avec de préférence un acier faiblement allié et à faible teneur en carbone, tel que l'acier Z 200 C 13.

Le banc d'usinage par électro-érosion est connu en soi, et n'est pas représenté sur les figures. Il convient néanmoins de présenter quelque détails sur les conditions opératoires propres à l'application concernée, permettant d'obtenir un outil formaire en acier à partir d'une électrode gravée en graphite.

En ce qui concerne le liquide diélectrique, on pourra utiliser une huile très fluide, dont la densité à 15°C est de 0,790, et la viscosité cinématique à 20°C est de 2,53 ; un tel liquide présente des propriétés de très faible volatilité, de point d'éclair élevé et de très bonne résistance à l'oxydation, tout en fournissant un usinage, aux cotes précises et aux profils délicats.

L'usinage par électro-érosion se fait par passes successives correspondant à des phases d'ébauche, de semi-finition, et de finition. Par exemple, il sera prévu trois passes d'ébauche avec l'électrode au positif (avec des profondeurs d'amorçage respectives de 250 μm, 1 550 μm et 1 700 μm), plus une passe de semi-finition avec l'électrode au positif (avec une profondeur d'amorçage de 1 800 μm), et enfin trois passes de finition avec l'électrode au négatif (avec des profondeurs d'amorçage respectives de 1 850 μm, 1 880 μm et 1 900 μm).

Le temps d'usinage par électro-érosion varie naturellement avec la surface et la profondeur concernées ; à titre indicatif, pour une contre-matrice de 180 x 85 mm et une profondeur de 1,9 mm, ce temps sera de l'ordre de 35 heures.

Ainsi que cela a été dit plus haut, l'étape d'usinage par électro-érosion est en général automatisée, avec une servo-commande de la descente de l'électrode, cette descente étant asservie à la différence de potentiel entre l'électrode et la pièce à usiner.

Il convient d'assurer également une automatisation aussi poussée que possible pour les deux étapes précédentes, c'est-à-dire la numérisation des valeurs de la photogravure et la gravure automatique en correspondance biunivoque avec les niveaux de gris saisis.

A cet effet, l'ensemble saisie des niveaux de gris, mémorisation sur disquette, transfert de l'image sur imprimante, commande de la gravure et communication avec le monde extérieur est régi par un micro-ordinateur 9, muni d'un interface à micropresseur 10 spécialement adapté pour effectuer tous les programmes de routine en temps réel (déplacement des moteurs d'un pas, acquisition du codage des niveaux de gris, etc...).

La figure 2 permet de bien comprendre le principe d'une gravure plan par plan, avec une profondeur de gravure croissant régulièrement par rapport à la surface initiale d'une ébauche.

Pour ne pas compliquer la représentation, on a supposé pour cette figure que l'ébauche 11 est usinée progressivement en escalier :
- sur le schéma 1), une passe d'usinage a permis de définir une surface 12 de niveau inférieur à celui de la surface initiale 13 (cela pourrait concerner le premier niveau de gris, ou le second si l'on souhaite avoir un niveau zéro pour le blanc) ;
- sur le schéma 2), une deuxième passe d'usinage définit une surface 14, de niveau inférieur à celui de la surface 12 ;
- sur le schéma 3), une troisième passe d'usinage définit une surface 15, de niveau inférieur à celui de la surface 14.

D'une façon générale, une profondeur de gravure en correspondance avec un niveau de gris est réalisée en une ou plusieurs passes d'usinage, selon le degré de profondeur et la fragilité de l'électrode à graver. Comme indiqué plus haut, le plus bas niveau de gris peut être associé à une profondeur de gravure nulle, c'est-à-dire la pleine épaisseur de l'électrode.

Avec une électrode en graphite usinée par une fraise rotative, les profondeurs de gravure envisagées sont de l'ordre de 1,8 à 2 mm. L'usinage se fait niveau par niveau, chacun des dix niveaux de gris correpondant ainsi à environ 2/10 mm ; en fait, avec des passes de 1/10 mm qui permettent une gravure évitant tout risque de cassure, quarante passes seront nécessaires. A titre indicatif, il faudra un temps d'usinage d'environ 60 heures pour obtenir ainsi une profondeur de gravure allant jusqu'à 2 mm.

On va maintenant décrire un mode de réalisation d'appareil permettant la mise en oeuvre du procédé qui vient d'être décrit, et plus particulièrement un appareil comportant des moyens pour graver par usinage une électrode, plan par plan, selon une profondeur de gravure prédéterminée croissant régulièrement par rapport à la surface initiale de ladite électrode, et des moyens pour positionner dans un plan l'électrode à graver par rapport aux moyens de gravure par usinage.

Il est en effet inutile d'alourdir la description pour ce qui est des moyens de digitalisation, de stockage et de traitement des données, et de pilotage, qui sont connus ; il en va de même pour le banc d'usinage par électro-érosion, étant donné que l'homme de l'art dispose de toutes les informations nécessaires concernant les conditions opératoires.

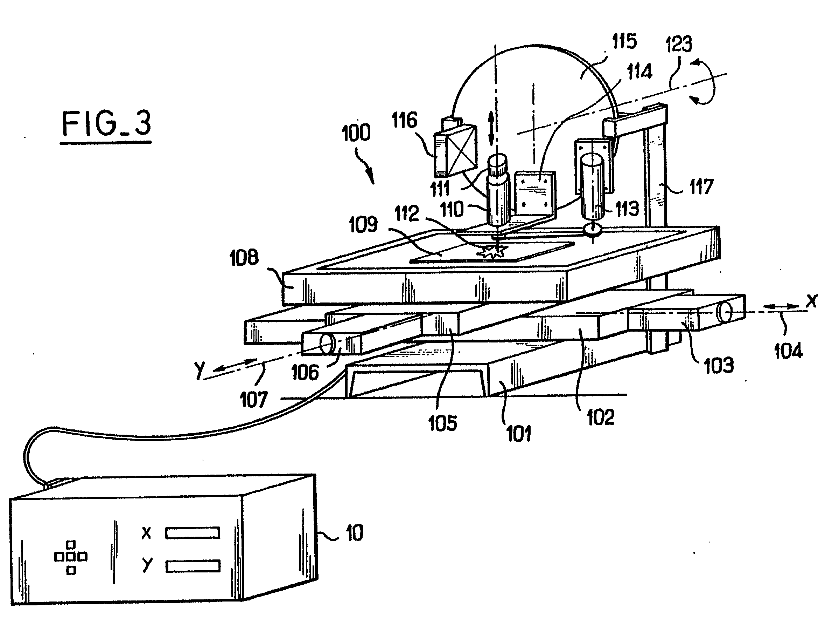

La figure 3 illustre un appareil 100 pour la mise en oeuvre du procédé de l'invention, en particulier des moyens de gravure et de positionnement permettant de graver l'électrode, plan par plan, celle-ci permettant à son tour d'obtenir un outil formaire en acier par électro-érosion ainsi que cela a été dit plus haut. Sur un socle fixe 101 est disposée une table à mouvements croisés constituée par un élément de table 102 équipé d'un moteur pas à pas 103, ledit moteur permettant de déterminer un mouvement de translation de l'élément de table 102 selon l'axe des x 104 par rapport au socle fixe 101 ; on trouve de la même façon un élément de table 105 équipé d'un moteur pas à pas 106, l'élément de table 105 pouvant se déplacer selon une translation de direction parallèle à l'axe des y 107, les axes 104 et 107 étant de préférence orthogonaux. Une table de travail 108 est disposée sur la table à mouvements croisés, et une liaison à l'interface 10 permet ainsi d'organiser la commande automatique du déplacement de la table de travail 108 en x et y.

Une électrode à usiner 109, de préférence en graphite, est disposée sur la table de travail 108.

Lorsque l'on choisit un matériau à caractère translucide pour réaliser la gravure , la surveillance de l'évolution du travail se trouve alors facilitée si l'on organise un éclairage de la plaque à graver ; dans ce cas, la table de travail 108 comprend des organes permettant un éclairage de la face supérieure de ladite table, laquelle se comporte comme une boîte à lumière.

Conformément à un aspect essentiel de l'invention, les moyens de gravure par usinage comportent une fraise rotative 110, et des moyens permettant de déterminer avec précision la profondeur de gravure pour chaque passe successive, moyens comportant ici une vis micrométrique 111. La fraise rotative 110 est ainsi telle que son outil d'usinage 112 puisse être déplacé dans une direction fixe de travail perpendiculaire au plan de la table à mouvements croisés équipée de ses deux moteurs pas à pas. Un moteur d'entraînement 113 permet d'entrîner en rotation l'outil de fraisage 112 à une vitesse prédéterminée, choisie en fonction du matériau constituant l'électrode 109 ; avec du graphite, on pourra choisir une vitesse de l'ordre de 6 000 tours/minute.

Ainsi, pour chaque niveau de gris qui a été saisi, l'interface 10 transmet des instructions de commande aux moteurs 103 et 106 de telle façon que l'électrode à graver 109 soit déplacée selon un balayage s'effectuant de préférence colonne par colonne sur la plus grande longueur de ladite électrode, en se déplaçant d'un pixel sur une ligne après chaque retour. Le mouvement relatif entre la table de travail 108 et l'outil de fraisage 112 correspond ainsi de préférence au même balayage que celui qui était prévu pour la saisie des niveaux de gris de la photographie.

Compte tenu de la similitude des deux balayages en x et y, il est particulièrement intéressant de pouvoir utiliser la table mobile pour supporter aussi bien l'image en noir et blanc dont les valeurs sont à numériser que l'électrode à graver.

A cet effet, le support 114 de la fraise rotative est monté sur un barillet 115 qui supporte également un capteur 116 servant à numériser les valeurs de l'image en noir et blanc, ce capteur étant de préférence du type détecteur optique à réflexion de grande résolution ainsi que cela a été expliqué plus haut.

Il suffit ainsi de choisir la position angulaire du barillet 115 pour amener le capteur 116 ou la fraise rotative 110 au-dessus de la table de travail : la rotation correspondante du barillet est ici de l'ordre de 90°.

On peut ainsi réaliser une correspondance parfaitement biunivoque entre la profondeur de gravure et le niveau de gris saisi, et ce pour chaque triplet (x, y, niveau de gris) et (X, Y, profondeur de gravure).

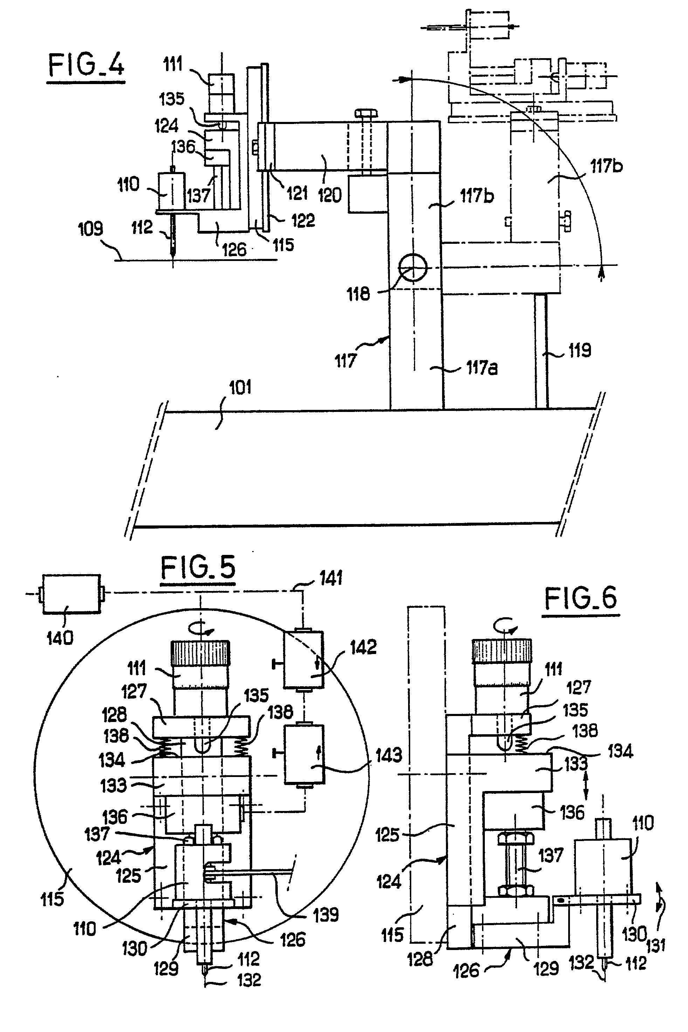

Il est avantageusement prévu une potence de support 117 dont une partie est basculable autour d'un axe horizontal, ce qui permet un dégagement vers l'arrière du barillet 115 et des organes qu'il supporte sans modifier en quoi que ce soit le réglage positionnel ; l'opérateur peut alors à tout moment interrompre le processus de gravure et dégager l'ensemble d'usinage pour surveiller le bon déroulement du travail en cours. La figure 4 illustre ainsi une potence 117 dont la partie inférieure 117a est fixée sur le socle 101, et dont partie supérieure 117b est articulée autour d'un axe 118. La position de travail est illustrée en traits continus, et la position de dégagement en traits mixtes, après un basculement qui est ici de l'ordre de 90°, jusqu'à un appui sur une butée fixe arrière 119 disposée sur le socle fixe 101. La partie supérieure 117b de la potence peut être constituée par deux branches d'équerre, terminées chacune par un bras 120 pouvant pivoter autour d'un axe vertical, ledit bras se terminant par un étrier de fixation 121 pouvant enserrer un épaulement 122 du barillet 115.

Les organes supportant le barillet 115 en arrière de celui-ci n'ont pas été représentés pour éviter de charger inutilement les figures, et l'axe 123 illustré en figure 3 rappelle que ce barillet peut être tourné, manuellement ou par des moyens mécaniques automatiques, entre une position de travail (celle de la figure 3), et une position de numérisation pour laquelle le capteur 116 est alors disposé au-dessus de la table de travail qui supporte dans ce cas la photographie 1.

Les moyens de support de la fraise rotative sont sur la figure 3 illustrés sous forme d'une cornière support 114 fixée sur le barillet 115 ; ceci suppose que la fraise 110 comporte des moyens permettant une translation de l'outil de fraisage 112 dans la direction de travail, selon une amplitude associée à la profondeur de gravure. Les figures 5 et 6 illustrent un mode de réalisation préféré de ces moyens de support, à la fois simples dans leur structure et fiables dans leur fonctionnement.

Une platine en équerre 124 est ainsi montée fixe sur le barillet 115 par une branche 125, ladite branche 125 présentant une rainure médiane, centrée sur un diamètre du barillet 115 et permettant de recevoir à coulissement un organe 126 supportant la fraise rotative 110. L'organe support 126 comporte ici une portion supérieure horizontale 127 sur laquelle est montée une vis micrométrique 111, une portion intermédiaire 128 coulissant sur la branche 125, et une portion inférieure 129 se terminant par une plaquette support 130 sur laquelle est monté le corps de la fraise rotative 110. Ainsi qu'illustré en figure 6, la plaquette support 130 peut être articulée sur la portion 129 (flèche 131) de façon à disposer d'un réglage supplémentaire pour une parfaite verticalité de l'axe 132 de la fraise rotative resprésentant la direction de travail de l'outil d'usinage 112. La branche 133, sensiblement horizontale, de la platine en équerre 124 représente par sa face supérieure 134 un niveau de référence pour la partie mobile, c'est-à-dire lorsqu'une butée 135 dont la position est déterminée directement par la vis micrométrique 111 vient en appui sur ladite face 134, ce qui correspond à une position basse de l'outil d'usinage 112 pour une profondeur déterminée en correspondance avec un niveau de gris associé.

La platine en équerre 124 supporte par ailleurs un organe de commande 136 qui est de préférence un vérin à simple effet à rappel par ressort, dont la tige peut venir en contact avec une butée 137 montée sur la portion 129. Des ressorts 138 disposés entre les portions 127 et 133 tendent à appliquer la butée 137 contre la tige du vérin 136 et permet ainsi un rattrapage de jeu avantageux.

L'outil d'usinage 112 est animé en permanence d'un mouvement de rotation par l'intermédiaire de la courroie 139 en prise sur la sortie du moteur 113 (non représentée sur la figure 5). La fraise rotative 110 est ici en position haute, position dans laquelle la butée 135 n'est pas en appui sur la face 134 ; dès qu'une instruction de commande est adressée au vérin 136, sa tige tend à repousser la butée 137 et ainsi à descendre le support de la fraise 126 jusqu'à ce que la butée 135 vienne en contact de la face en regard 134.

L'opérateur règle ainsi manuellement par la vis micrométrique 111 la profondeur de gravure, et peut ainsi décider de procéder à plusieurs passes intermédiaires jusqu'à ce que la profondeur de gravure correspondant à un niveau de gris déterminé soit atteinte.

On a par ailleurs illustré sur la figure 5 des organes électro-pneumatiques de commande associés au vérin 136, en vue d'un fonctionnement précis et fiable. On trouve ainsi un distributeur 3-2 140 à commande électrique par électro-aimant dont la conduite de sortie 141 passe par deux clapets 142, 143 avant d'arriver au vérin 136. Ces clapets 142, 143, du type clapet de non retour avec réglage d'étranglement, constituent des limiteurs de vitesse avantageux : le clapet 142 est associé au mouvement de descente de l'outil d'usinage dont la descente ainsi contrôlée évite tout risque de cassure de l'électrode à usiner, tandis que le clapet 143 est associé au mouvement de remontée dudit outil, et permet d'éviter un choc trop brutal en butée d'appui qui pourrait dérégler le système.

L'appareil 100 qui vient d'être décrit permet ainsi de graver automatiquement une électrode,plan par plan,directement à partir des données provenant de la numérisation des valeurs d'une image en noir et blanc, avec une profondeur de gravure croissant régulièrement par rapport à la surface initiale de ladite électrode, la profondeur de gravure étant en correspondance biunivoque avec les niveaux de gris de ladite image.

Il va de soi que les organes constitutifs de l'appareil qui viennent d'être décrits ne soit cités qu'à titre d'exemple, et que l'invention vise à couvrir d'une façon générale un appareil comportant :
- des moyens connus en soi pour numériser les valeurs d'une image en noir et blanc en pixels à plusieurs niveaux de gris,
-des moyens pour graver par usinage une électrode, plan par plan, selon une profondeur de gravure prédéterminée croissant régulièrement par rapport à la surface initiale de ladite électrode, et des moyens pour positionner dans un plan l'électrode à graver par rapport aux moyens de gravure par usinage, lesdits moyens de gravure et de positionnement étant commandés automatiquement à partir des données relatives à chacun desdits pixels afin d'obtenir des profondeurs de gravure en correspondance biunivoque avec les niveaux de gris l'électrode ainsi gravée permettant d'obtenir l'outil désiré par électro-érosion.

De même, pour ce qui est du procédé, les étapes de traitement des informations et/ou de stockage ne sont présentées que comme des options avantageuses.

D'une façon générale, l'invention n'est pas limitée au mode de réalisation qui vient d'être décrit, mais englobe toute variante reprenant aveo des moyens équivalents les caractéristiques figurant aux revendications.

## Revendications

1. Procédé de fabrication d'un outil en acier servant à l'emboutissage des toiles formaires d'une forme ronde utilisée dans l'industrie du papier fiduciaire pour réaliser des filigranes, ledit outil étant obtenu par électro-érosion à partir d'une électrode, comportant les étapes successives suivantes :
   a) on numérise (2) les valeurs d'une image en noir et blanc en pixels à plusieurs niveaux de gris,
   b) on grave automatiquement par usinage (6) une électrode, plan par plan, directement à partir des données précédentes, avec une profondeur de gravure croissant régulièrement par rapport à la surface initiale de ladite électrode, la profondeur de gravure étant en correspondance biunivoque avec les niveaux de gris,
   c) on dispose (7) l'éelctrode ainsi gravée dans un banc d'usinage par électro-érosion jusqu'à obtention d'un outil (8) présentant l'état de surface recherché.

2. Procédé selon la revendication 1, caractérisé par le fait que l'éelctrode gravée est usinée (6), pour chaque profondeur de gravure, selon un balayage analogue à celui employé pour numériser l'image en noir et blanc.

3. Procédé selon la revendication 2, caractérisé par le fait qu'on utilise un balayage orthogonal en x, y, de sorte que les informations relatives à chaque pixel (x, y, niveau de gris) correspondent directement à une instruction de gravure ( X, Y, profondeur de gravure).

4. Procédé selon la revendication 3, caractérisé par le fait que les informations relatives à chaque pixel sont éventuellement traitées (4) par des moyens informatiques pour améliorer les contrastes et/ou nettoyer des zones et/ou modifier des détails.

5. Procédé selon l'une des revendications 3 et 4, caractérisé par le fait que les informations relatives à chaque pixel, éventuellement traitées, sont mises en mémoire (5), de préférence stockées sur une ménmoire magnétique permanente.

6. Procédé selon l'une des revendications 1 à 5, caractérisé par le fait qu'une profondeur de gravure en correspondance avec un niveau de gris est réalisée en une ou plusieurs passes d'usinage selon le degré de profondeur et la fragilité de l'électrode à graver.

7. Procédé selon l'une des revendications 1 à 6, caractérisé par le fait que le plus bas niveau de gris est associé à une profondeur de gravure nulle, c'est-à-dire la pleine épaisseur de l'électrode.

8. Procédé selon l'une des revendications 1 à 7, caractérisé par le fait que l'électrode gravée est en graphite, la gravure par usinage (6) de ladite électrode se faisant au moyen d'une fraise rotative.

9. Procédé selon l'une des revendications 1 à 8, caractérisé par le fait que l'outil (8) est obtenu à partir d'une pièce à usiner en acier non traité ayant une faible teneur en carbone.

10. Appareil pour la mise en oeuvre du procédé selon l'une des revendications précédentes, comportant :
- des moyens connus en soi pour numériser les valeurs d'une image en noir et blanc en pixels à plusieurs niveaux de gris,
- des moyens (110, 112) pour graver par usinage une électrode, plan par plan, selon une profondeur de gravure prédéterminée croissant régulièrement par rapport à la surface initiale de ladite électrode, et des moyens (102, 103, 105, 106) pour positionner dans un plan l'électrode à graver (109) par rapport aux moyens de gravure par usinage, lesdits moyens de gravure (110, 112) et de positionnement (102, 103, 105, 106) étant commandés automatiquement à partir des données relatives à chacun desdits pixels afin d'obtenir des profondeurs de gravure en correspondance biunivoque avec les niveaux de gris, l'électrode ainsi gravée permettant d'obtenir l'outil désiré par électro-érosion.

11. Appareil selon la revendication 10, caractérisé par le fait que les moyens de gravure par usinage comportent une fraise rotative (110, 112), et une butée réglable (135) permettant de déterminer avec précision la profondeur de gravure pour chaque passe successive.

12. Appareil selon la revendication 11, caractérisé par le fait que la fraise rotative (110, 112) est montée sur un support (126) mobile en translation dans la direction fixe de travail de ladite fraise rotative, ledit support mobile étant réglé en position au moyen d'une vis micrométrique (111).

13. Appareil selon les revendications 11 et 12, caractérisé par le fait que la vis micrométrique (111) détermine la position de la butée réglable (135) correspondant à une profondeur de gravure associée, des moyens élastiques (138) étant en outre prévus tendant à rappeler la fraise rotative (110, 112) vers une position relevée.

14. Appareil selon les revendications 10 et 11, caractérisé par le fait que les moyens de positionnement comportent une table à mouvements croisés (102, 105, 108), équipée de deux moteurs pas à pas (103, 106) et dont le plan est perpendiculaire à la direction fixe de travail de la fraise rotative (110, 112).

15. Appareil selon les revendications 10 à 12 et 14, caractérisé par le fait que le support (114, 126) de la fraise rotative (110, 112) est monté sur un barillet (115) qui supporte également un capteur (116) servant à numériser les valeurs de l'image en noir et blanc, tel qu'un détecteur optique à réflexion de grande résolution.

16. Appareil selon les revendications 14 et 15, caractérisé par le fait que la table mobile (102, 105, 108) peut supporter aussi bien l'image en noir et blanc (1) dont les valeurs sont à numériser que l'électrode à graver (109), la position angulaire du barillet (115) support étant déterminée pour amener le capteur (116) ou la fraise rotative (110, 112) au-dessus de la table de travail (108).

17. Appareil selon la revendication 16, caractérisé par le fait que le barillet (115) et les organes qu'il supporte peuvent être dégagés par basculement d'une potence de support (117).

**Claims**

1. Method for the production of a steel tool serving for the stamping of a forming wire of a mould used in the fiduciary paper industry for producing watermarks, said tool being obtained by electro-erosion from an electrode, comprising the following successive stages:

a) the values of a black and white image are digitized (2) in pixels with several shades of grey,

b) an electrode is engraved automatically by machining (6), plane by plane, directly from the preceding data, with an engraving depth increasing uniformly with respect to the initial surface of said electrode, the engraving depth being in biunivocal correspondence with the shades of grey,

c) the electrode thus engraved is disposed (7) in a bench for machining by electro-erosion until a tool (8) having the desired surface state is obtained.

2. Method according to Claim 1, characterised by the fact that the engraved electrode is machined (6), for each depth of engraving, according to a scanning similar to that used for digitizing the image in black and white.

3. Method according to Claim 2, characterised by the fact that orthogonal x, y scanning is used, so that the information relating to each pixel (x, y, shade of grey) corresponds directly to an engraving instruction (X, Y, depth of engraving).

4. Method according to Claim 3, characterised by the fact that the information relating to each pixel is possibly processed (4) by information means in order to improve the contrasts and/or to clean areas and/or modify details.

5. Method according to one of Claims 3 and 4, characterised by the fact that the information relating to each pixel, possibly processed, is memorised (5), preferably stored on a permanent magnetic memory.

6. Method according to one of Claims 1 to 5, characterised by the fact that a depth of engraving corresponding to a shade of grey is achieved in one or more machining passes according to the degree of depth and the fragility of the electrode to be engraved.

7. Method according to one of Claims 1 to 6, characterised by the fact that the deepest shade of grey is associated with a zero depth of engraving, i.e. the full thickness of the electrode.

8. Method according to one of Claims 1 to 7, characterised by the fact that the engraved electrode is made of graphite, engraving by machining (6) of said electrode taking place by means of a rotary milling tool.

9. Method according to one of Claims 1 to 8, characterised by the fact that the tool (8) is obtained from a part to be machined made of untreated steel having a low carbon content.

10. Apparatus for carrying out the method according to one of the preceding Claims, comprising:

– means known per se for digitizing the values of a black and white image in pixels with several shades of grey,

– means (110, 112) for engraving by machining an electrode, plane by plane, according to a predetermined engraving depth increasing uniformly with respect to the initial surface of said electrode and means (102, 103, 105, 106) for positioning in a plane the electrode to be engraved (109) with respect to the means for engraving by machining, said engraving means (110, 112) and positioning means (102, 103, 105, 106) being controlled automatically from data relating to each of said pixels in order to obtain engraving depths in biunivocal correspondence with the shades of grey, the electrode thus engraved making it possible to obtain the desired tool by electro-erosion.

11. Apparatus according to Claim 10, characterised by the fact that the means for engraving by machining comprise a rotary milling tool (110, 112) and an adjustable stop (135) making it possible to determine precisely the depth of engraving for each successive pass.

12. Apparatus according to Claim 11, characterised by the fact that the rotary milling tool (110, 112) is mounted on a support (126) able to move by translation in the fixed working direction of said rotary milling tool, the said movable support being regulated in position by means of a micrometer screw (111).

13. Apparatus according to Claims 11 and 12, characterised by the fact that the micrometer screw (111) determines the position of the adjustable stop (135) corresponding to an associated engraving depth, resilient means (138) also being provided which tend to restore the rotary milling tool (110, 112) to a raised position.

14. Apparatus according to Claims 10 and 11, characterised by the fact that the positioning means comprise a table having intersecting movements (102, 105, 108), equipped with two stepping motors (103, 106) and whereof the plane is perpendicular to the fixed working direction of the rotary milling tool (110, 112).

15. Apparatus according to Claims 10 to 12 and 14, characterised by the fact that the support (114, 126) of the rotary milling tool (110, 112) is mounted on a cylinder (115) which also supports a sensor (116) serving to digitize the values of the black and white image, such as an optical detector having high resolution reflection.

16. Apparatus according to Claims 14 and 15, characterised by the fact that the movable table (102, 105, 108) may also support the black and white image (1) whereof the values are to be digitized as well as the electrode (109) to be engraved, the angular position of the support cylinder (115) being determined in order to bring the sensor (116) or the rotary milling tool (110, 112) above the working table (108).

17. Apparatus according to Claim 16, characterised by the fact that the cylinder (115) and the members which it supports may be disengaged by tilting a support bracket (117).

**Patentansprüche**

1. Verfahren zur Herstellung eines Werkzeugs aus Stahl, das zum Prägen von Wassermarksieben runder Form dient, wie sie in der Papiergeldindustrie verwendet wird, um Wasserzeichen herzustellen, wobei das Werkzeug durch Elektroerosion von einer Elektrode erhalten wird, wobei das Verfahren folgende, sukzessive Verfahrensschritte aufweist:
a) man digitalisiert (2) die Werte eines Schwarz-Weiß-Bildes in Pixel mit mehreren Graustufen,
b) man graviert automatisch durch maschinelle Bearbeitung (6) Schicht für Schicht eine Elektrode direkt von den vorhergehenden Daten ausgehend mit einer Gravurungstiefe, die regelmäßig bezüglich der ursprünglichen Oberfläche der Elektrode wächst, wobei die Gravurungstiefe in einer eineindeutigen Beziehung mit den Graustufen steht,
c) man richtet (7) die derart gravierte Elektrode in einer für Elektroerosionswerkbank ein, bis man ein Werkzeug (8) erhält, das den gesuchten Oberflächenzustand aufweist.

2. Verfahren nach Anspruch 1, gekennzeichnet durch die Tatsache, daß die gravierte Elektrode für jede Gravierungstiefe nach einem Abtastverfahren maschinell bearbeitet wird (6), das dem für die Digitalisierung des Schwarz-Weiß-Bildes analog ist.

3. Verfahren nach Anspruch 2, gekennzeichnet durch die Tatsache, daß man eine rechtwinklige Abtastung in x-y-Richtung derart benutzt, daß die Informationen über jedes Pixel (x, y, Grauwert) direkt einer Gravureingabe (X, Y, Gravurtiefe) entsprechen.

4. Verfahren nach Anspruch 4, gekennzeichnet durch die Tatsache, daß die Informationen über jedes Pixel möglicherweise mittels einer Datenverarbeitungsvorrichtung behandelt werden (4), um die Kontraste zu verbessern und/oder Zonen zu reinigen und/oder Details zu modifizieren.

5. Verfahren nach einem der Ansprüche 3 und 4, gekennzeichnet durch die Tatsache, daß die Informationen über jedes Pixel, möglicherweise behandelt, in einem Speicher abgespeichert werden (5) und vorzugsweise in einem permanentmagnetischen Speicher abgespeichert werden.

6. Verfahren nach einem der Ansprüche 1 bis 5, gekennzeichnet durch die Tatsache, daß eine mit einem Grauwert korrespondierende Gravierungstiefe mittels einer oder mehrerer maschineller Behandlungsschritte entsprechend dem Grad der Tiefe und der Zerbrechlichkeit der zu gravierenden Elektrode erhalten wird.

7. Verfahren nach einem der Ansprüche 1 bis 6, gekennzeichnet durch die Tatsache, daß das dunkelste Grauniveau einer Gravierungstiefe von Null entspricht, das heißt, der vollen Dicke der Elektrode.

8. Verfahren nach einem der Ansprüche 1 bis 7, gekennzeichnet durch die Tatsache, daß die gravierte Elektrode aus Graphit besteht, wobei die Gravur durch maschinelle Bearbeitung (6) der Elektrode mittels einer rotierenden Fräse durchgeführt wird.

9. Verfahren nach einem der Ansprüche 1 bis 8, gekennzeichnet durch die Tatsache, daß das Werkzeug (8) ausgehend von einem nicht behandelten, maschinell zu verarbeitenden Stahlstück mit einem geringen Kohlenstoffgehalt erhalten wird.

10. Apparat zur Durchführung des Verfahrens nach einem der vorhergehenden Ansprüche mit:
– einer an sich bekannten Vorrichtung zum Digitalisieren eines Schwarz-Weiß-Bildes in Pixel mit mehreren Grauwerten,
– einer Vorrichtung (110, 112) zum maschinellen Gravieren einer Elektrode Ebene für Ebene nach einer vorgegebenen Gravierungstiefe, die regelmäßig bezüglich der anfänglichen Oberfläche der Elektrode anwächst und mit einer Vorrichtung (102, 103, 105, 106), um die zu gravierende Elektrode (109) in einer Ebene bezüglich der maschinellen Gravierungsvorrichtung auszurichten, wobei die Gravierungsvorrichtung (110, 112) und Positioniervorrichtung (102, 103, 105, 106) automatisch ausgehend von den Daten bezüglich jedes der Pixel gesteuert werden, um den Grauwerten eineindeutig entsprechende Gravierungstiefen zu erhalten, wobei die derart gravierte Elektrode erlaubt, das gewünschte Werkzeug durch Elektroerosion zu erhalten.

11. Apparat nach Anspruch 10, gekennzeichnet durch die Tatsache, daß die maschinelle Gravierungsvorrichtung eine rotierende Fräse (110, 112) und einen regelbaren Anschlag (135) aufweist, der ermöglicht, mit Präzision die Gravierungstiefe für jeden sukzessiven Bearbeitungsgang zu bestimmen.

12. Apparat nach Anspruch 11, gekennzeichnet durch die Tatsache, daß die rotierende Fräse (110, 112) auf ein entlang der festen Arbeitsrichtung der rotierenden Fräse bewegliches Stützteil (126) befestigt ist, wobei das bewegliche Stützteil mittels einer Mikrometerschraube (111) in Position gebracht wird.

13. Apparat nach den Ansprüchen 11 und 12, gekennzeichnet durch die Tatsache, daß die Mikrometerschraube (111) die Position des regulierbaren Anschlags (135) entsprechend einer damit verbundenen Gravierungstiefe bestimmt, wobei außerdem eine elastische Vorrichtung (138) vorgesehen ist, die die rotierende Fräse (110, 111) in eine hochgehobene Stellung zurückbringt.

14. Apparat nach den Ansprüchen 10 und 11, gekennzeichnet durch die Tatsache, daß die Positioniervorrichtung einen Kreuztisch (102, 105, 108) aufweist, der mit zwei Schrittmotoren (193, 106) ausgestattet ist und dessen Ebene senkrecht zur festen Arbeitsrichtung der rotierenden Fräse (110, 112) ist.

15. Apparat nach den Ansprüohen 10 bis 12, gekennzeichnet durch die Tatsache, daß das Stützteil (114, 126) der rotierenden Fräse (110, 112) auf ein Federgehäuse (115) montiert ist, das außerdem einen Aufnehmer (116), der zum Digitalisieren der Werte des Schwarz-Weiß-Bildes dient, wie etwa einen optischen Reflektionsdetektor mit großer Auflösung, trägt.

16. Apparat nach den Ansprüchen 14 und 15, gekennzeichnet durch die Tatsache, daß der bewegliche Tisch (102, 105, 108) das Schwarz-Weiß-Bild, dessen Werte zu digitalisieren sind, ebenso wie auch die zu gravierende Elektrode (109) tragen kann, wobei die Winkelposition des stützenden Federgehäuses (115) festgelegt ist, um den Aufnehmer (116) oder die rotierende Fräse (110, 112) über den Arbeitstisch (108) zu bringen.

17. Apparat nach Anspruch 16, gekennzeichnet durch die Tatsache, daß das Federgehäuse (115) und die Teile, die es trägt, durch Schwenken eines Tragarms (117) weggeschwenkt werden können.

FIG_1

FIG_2

FIG_3

115
123
114
100
116
117
111
113
112
110
109
108
106
107
105
101
102
103
104
X
Y
10
X
Y

EP 0 252 842 B1

FIG.4

FIG.5

FIG.6